# EUROPEAN PATENT APPLICATION

(11) **EP 4 428 092 A1**
(43) Date of publication of application: **11.09.2024**
(21) Application number: 24160843.9
(22) Date of filing: 01.03.2024
(51) Int. Cl.: C01B 3/16

(54) **WATER GAS SHIFT UNIT STEAM SUPERHEATER**

(30) Priority: 01.03.2023 US 202318115918
(71) Applicant: Air Products and Chemicals, Inc., Allentown, PA 18106-5500 (US)
(72) Inventor: Zhang, Yanlai, Shanghai, 201306 (CN)
(74) Representative: Kador & Partner Part mbB

(57) **Abstract**

A method and system for converting a syngas stream to a shifted syngas stream in a shift reactor comprising a first mode of operation and a second mode of operation. The first mode of operation uses heat from the shifted syngas stream to superheat steam in a heat exchanger. The second mode of operation uses the same heat exchanger to heat a partially shifted syngas stream while the shift reactor is heating up to a normal operating temperature.

## Description

### BACKGROUND

The partial combustion or gasification of solid carbonaceous fuels such as coal to produce syngas streams rich in hydrogen and carbon monoxide having value as residential and industrial fuels, as starting materials for synthesis of chemicals and fuels, and as an energy source for generation of electricity has long been recognized and practiced on varying scales throughout the world.

A water gas shift unit uses a catalyst to react carbon monoxide with water to form hydrogen and carbon dioxide, and is a common method to change the ratio of hydrogen to carbon monoxide in a syngas stream. The process is exothermic and the heat generated by water gas shift may be used to generate and/or superheat steam.

### SUMMARY

The present disclosure relates to a process for converting a syngas stream to form a shifted syngas stream by reacting, in a water gas shift reactor, water and carbon monoxide in the syngas stream to produce hydrogen and carbon dioxide. The exothermic reaction provides heat to a heat exchanger in a first mode of operation. In other modes of operation the same heat exchanger is used to preheat gases used to sulfurize, preheat, and/or start up the water gas shift reactor.

Aspect 1: A method for converting a syngas stream to a shifted syngas stream comprising a first mode of operation and a second mode of operation, wherein the first mode of operation comprises transferring heat from a warm shifted syngas stream to the syngas stream in a first heat exchanger to produce the shifted syngas stream and a heated syngas stream; reacting the heated syngas stream in the presence of a shift catalyst to produce a hot shifted syngas stream; and transferring heat from the hot shifted syngas stream to a steam stream in a second heat exchanger to produce the warm shifted syngas stream and a superheated steam stream; and wherein the second mode of operation comprises transferring heat from a hot partially shifted syngas stream to the syngas stream in the first heat exchanger to produce a warm partially shifted syngas stream and the heated syngas stream; reacting the heated syngas stream in the presence of a shift catalyst to produce a partially shifted syngas stream; and transferring heat from a preheating fluid to the partially shifted syngas stream in the second heat exchanger to produce a cooled preheating fluid and the hot partially shifted syngas stream.

Aspect 2: A method according to Aspect 1, wherein the temperature of the preheating fluid is between 250 and 500 °C.

Aspect 3: A method according to Aspect 1 or Aspect 2, wherein the water to dry gas ratio of the syngas stream is between 0.2 and 0.6.

Aspect 4: A method according to any of Aspects 1 to 3, wherein the temperature of the heated syngas stream is between 15 °C and 30 °C higher than the dew point of the heated syngas stream.

Aspect 5: A method according to any of Aspects 1 to 4, wherein the reaction of the heated syngas stream is adiabatic.

Aspect 6: A method according to any of Aspects 1 to 5, wherein the temperature of the shifted syngas stream is greater than 350 °C.

Aspect 7: A method according to any of Aspects 1 to 6, wherein the second mode further comprises forming a bypass stream comprising at least a portion of the preheating fluid, wherein the bypass stream bypasses the second heat exchanger; measuring a temperature of at least one of the cooled preheating fluid, the partially shifted syngas stream, and the hot partially shifted syngas stream; and changing the flow rate of the bypass stream to control the temperature of at least one of the cooled preheating fluid, the partially shifted syngas stream, and the hot partially shifted syngas stream.

Aspect 8: A method according to any of Aspects 1 to 7, further comprising a third mode of operation, the third mode comprising transferring heat from the preheating fluid to a circulation gas stream in the second heat exchanger to produce the cooled preheating fluid and a heated circulation gas stream; and contacting the heated circulation gas stream with the shift catalyst.

Aspect 9: A method according to Aspect 8, wherein the third mode further comprises forming a bypass stream comprising at least a portion of the preheating fluid, wherein the bypass stream bypasses the second heat exchanger; measuring a temperature of at least one of the cooled preheating fluid, the circulation gas stream, and the heated circulation gas stream; and changing the flow rate of the bypass stream to control the temperature of at least one of the cooled preheating fluid, the circulation gas stream, and the heated circulation gas stream.

Aspect 10: A method according to Aspect 8 or Aspect 9, wherein the circulation gas comprises an inert gas.

Aspect 11: A method according to Aspect 8 or Aspect 9, wherein the circulation gas comprises an inert gas, a reducing gas, and a sulfur agent.

Aspect 12: A system for converting a syngas stream to a shifted syngas stream comprising a first heat exchanger comprising a hot side inlet, a hot side outlet, a cold side inlet, and a cold side outlet; a second heat exchanger comprising a hot side inlet, a hot side outlet, a cold side inlet, and a cold side outlet; a reactor comprising a shift catalyst, an inlet, and an outlet; wherein the system comprises a first mode of operation and a second mode of operation, wherein during the first mode of operation the cold side inlet of the first heat exchanger is in fluid flow communication with the syngas stream; the cold side outlet of the first heat exchanger is in fluid flow communication with the inlet of the reactor; the outlet of the reactor is in fluid flow communication with the hot side inlet of the second heat exchanger; the hot side outlet of the second heat exchanger is in fluid flow communication with the hot side inlet of the first heat exchanger; and the cold side inlet of the second heat exchanger is in fluid flow communication with a steam stream; and wherein during the second mode of operation the cold side inlet of the first heat exchanger is in fluid flow communication with the syngas stream; the cold side outlet of the first heat exchanger is in fluid flow communication with the inlet of the reactor; the outlet of the reactor is in fluid flow communication with the cold side inlet of the second heat exchanger; the cold side outlet of the second heat exchanger is in fluid flow communication with the hot side inlet of the first heat exchanger; and the hot side inlet of the second heat exchanger is in fluid flow communication with a preheating fluid.

Aspect 13: A system according to Aspect 12, further comprising a third mode of operation, wherein during the third mode of operation the cold side inlet of the second heat exchanger is in fluid flow communication with a circulation gas stream; the cold side outlet of the second heat exchanger is in fluid flow communication with the inlet of the reactor; and the hot side inlet of the second heat exchanger is in fluid flow communication with the preheating fluid.

Aspect 14: A system according to Aspect 12 or Aspect 13, wherein the circulation gas comprises an inert gas.

Aspect 15: A system according to Aspect 12 or Aspect 13, wherein the circulation gas comprises an inert gas, a reducing gas, and a sulfur agent.

Aspect 16: A system according to any of Aspects 12 to 15, further comprising a bypass conduit comprising a bypass valve in fluid flow communication with the hot side inlet of the second heat exchanger and the hot side outlet of the second heat exchanger; one or more temperature sensors in fluid flow communication with at least one of the hot side outlet of the second heat exchanger, the cold side inlet of the second heat exchanger, and the cold side outlet of the second heat exchanger; and a temperature controller configured to receive at least one signal from the one or more temperature sensors and to deliver a signal to the bypass valve.

### BRIEF DESCRIPTION OF THE DRAWINGS

The present invention will hereinafter be described in conjunction with the appended figures wherein like numerals denote like elements:
Fig. 1 is a flowsheet depicting a water gas shift process according to an example embodiment of the present disclosure.
Fig. 2 is a flowsheet depicting a modification of the embodiment in Fig. 1 in which a second mode of operation is added for startup.
Fig. 3 is a flowsheet depicting a modification of the embodiment in Fig. 2 in which a third mode of operation is added for preheating a shift reactor and a fourth mode of operation is added for sulfurizing a shift catalyst.

### DETAILED DESCRIPTION

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention. Various changes may be made in the function and arrangement of elements without departing from the spirit and scope of the invention, as set forth in the appended claims.

The articles "a" or "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The phrase "at least a portion" means "a portion or all." The "at least a portion of a stream" has the same composition, with the same concentration of each of the species, as the stream from which it is derived.

The term "and/or" placed between a first entity and a second entity includes any of the meanings of (1) only the first entity, (2) only the second entity, or (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B but not C, (5) A and C but not B, (6) B and C but not A, and (7) A and B and C.

The adjective "any" means one, some, or all, indiscriminately of quantity.

"Downstream" and "upstream" refer to the intended flow direction of the process fluid transferred. If the intended flow direction of the process fluid is from the first device to the second device, the second device is downstream of the first device. In case of a recycle stream, downstream and upstream refer to the first pass of the process fluid.

The term "indirect heat exchange" refers to the process of transferring sensible heat and/or latent heat between two or more fluids without the fluids in question coming into physical contact with one another. The heat may be transferred through the wall of a heat exchanger or with the use of an intermediate heat transfer fluid. The term "hot stream" refers to any stream that exits the heat exchanger at a lower temperature than it entered. Conversely, a "cold stream" is one that exits the heat exchanger at a higher temperature than it entered.

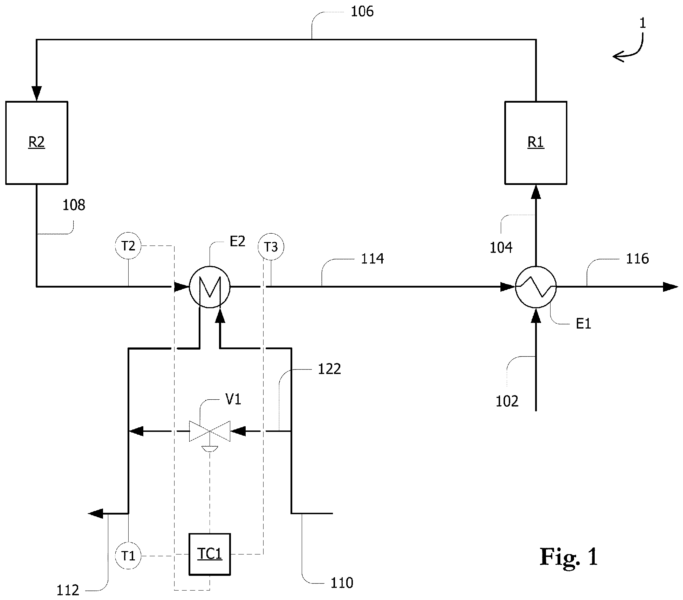

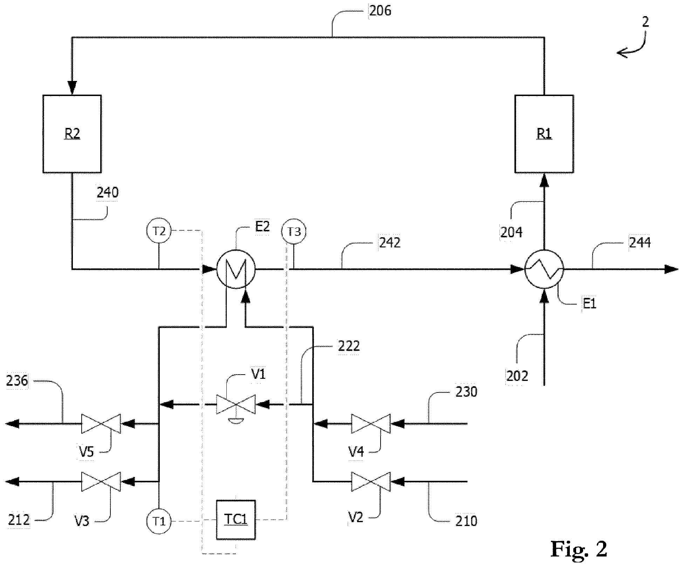

In this disclosure, elements shared between embodiments are represented by reference numerals increased by increments of 100. For example, the syngas stream 102 in Fig. 1 corresponds to the syngas stream 202 in Fig. 2. In the interest of clarity, some features of the embodiments of one figure that are shared with an embodiment in an earlier figure are numbered in subsequent figures but are not repeated in the specification. If a numbered feature is not specifically described in a subsequent embodiment, it may be assumed that this feature is substantially identical in structure and performs substantially the same function as in the last embodiment in which the feature was described.

Fig. 1 shows a water gas shift process 1 in a first mode of operation. The first mode of operation is the normal operating condition when the plant is at steady state. A syngas stream 102 comprising hydrogen and carbon monoxide is preheated in a first heat exchanger E1 by indirect heat exchange to produce a heated syngas stream 104. In at least some embodiments the syngas stream has a water to dry gas ratio of between 0.2 and 0.6. In at least some embodiments the temperature of the heated syngas stream 104 is between 15 and 30 °C higher than the dew point to prevent condensation. The heated syngas stream 104 may then enter an optional guard bed R1 to remove impurities that would damage the downsteam equipment, such as halogen compounds, sulfur compounds, and/or fine particulates that would poison water gas shift catalysts. The treated syngas stream 106 exits the guard bed R1 and feeds the water gas shift reactor R2. The water gas shift reactor contacts the treated syngas stream 106 with a shift catalyst to react carbon monoxide with water to produce hydrogen and carbon dioxide. To enhance this shift reaction, additional steam can optionally be introduced to the reactor (not shown). The water gas shift reaction is exothermic and the heat of reaction heats the syngas. In at least some embodiments the heating of the syngas takes place adiabatically, with minimal loss of heat to the environment. A hot shifted syngas stream 108 exits the water gas shift reactor R2 and enters a second heat exchanger E2. In the second heat exchanger E2 the hot shifted syngas stream 108 transfers heat to a steam stream 110 to produce a superheated steam stream 112. In at least some embodiments the second heat exchanger E2 may be used to boil water to generate steam or heat another process fluid. Optionally, the water gas shift reactor R2 and second heat exchanger E2 can be combined into an isothermal WGS reactor (not shown), where the reaction heat is absorbed by the internal cooling tubes to superheat steam. A warm shifted syngas stream 114 exits the second heat exchanger E2 and enters first heat exchanger E1 to preheat the syngas stream 102. A shifted syngas stream 116 exits the first heat exchanger E1 and may then be utilized directly or further processed as needed. For example, a second stage of water gas shift may be used to further increase the hydrogen to carbon monoxide ratio.

A control loop is shown for bypassing at least a portion of the steam stream 110 as a bypass stream 122 through control valve V1. After leaving the control valve V1, the bypass stream 122 is then combined with the superheated steam stream 112. The control valve V1 may be controlled by temperature controller TC1, which in turn may receive electrical signals from temperature sensors T1 on the superheated steam stream 112, T2 on the hot shifted syngas stream 108, and/or T3 on the warm shifted syngas stream 114. An overshoot in temperature in the water gas shift reactor R2 is particularly dangerous considering the exothermic nature of the water gas shift reaction. Some side reactions such as methanation are also exothermic, adding to the risk of runaway. Allowing the steam stream 110 to act as a heat sink for the water gas shift process 1 improves overall safety by reducing the risk of a thermal runaway that could damage the catalyst, or even the walls of the water gas shift reactor R2 itself.

Fig. 2 shows a water gas shift process 2 in which Fig. 1 has been modified to add a second mode of operation. The second mode of operation for the water gas shift process is required during startup of the water gas shift reactor R2. At this time the temperature of the syngas stream 202 is below the normal operating range. In the prior art, the syngas stream 202 may be indirectly heated by steam or natural gas in an auxiliary heater. Eliminating the auxiliary heater would save on capital costs. For that reason the second heat exchanger E2 is repurposed in this embodiment to provide the heating duty needed to preheat the syngas stream 202 in a second mode of operation. The second mode of operation involves closing steam isolation valves V2 and V3 to isolate the second heat exchanger E2 from a steam stream 210, and opening preheating fluid isolation valves V4 and V5 to connect the second heat exchanger E2 to a preheating fluid 230. In at least some embodiments the preheating fluid 230 comprises superheated steam. The second mode of operation effectively reverses the direction of heat transfer in second heat exchanger E2; in the second mode heat flows from preheating fluid 230 to a partially shifted syngas stream 240 to produce a hot partially shifted syngas stream 242 and a cooled preheating fluid 236. The partially shifted syngas stream 240 has been produced in the water gas shift reactor R2 by the reaction of treated syngas stream 206, but because the temperature of treated syngas stream 206 is below the normal operating range the degree of reaction is much lower and therefore a low amount of heat of reaction is released. The hot partially shifted syngas stream 242 then preheats the syngas stream 202, resulting in a warm partially shifted syngas stream 244 which may be recovered, recycled, flared, or vented as needed during the second mode of operation.

The same temperature controller TC1 can be used to control the preheating of the water gas shift reactor R2 by changing the amount of flow in bypass stream 222 in response to temperature sensors T1 on the cooled preheating fluid 236, T2 on the partially shifted syngas stream 240, and/or T3 on the hot partially shifted syngas stream 242. Heating the partially shifted syngas stream 240 with preheating fluid 230 improves process safety during the second mode of operation by preventing the partially shifted syngas stream 240 from being heated above the temperature of the preheating fluid 230 in the second heat exchanger E2. If the temperature of the partially shifted syngas stream 240 rises above the temperature of the preheating fluid, the second heat exchanger will cool the partially shifted syngas stream 240 and reduce the risk of a thermal runaway. In at least some embodiments the preheating fluid 230 must be above 250 °C to sufficienctly preheat the partially shifted syngas stream 240. In at least some embodiments the preheating fluid 230 must be below 500 °C, or below 450 °C, to prevent overheating in the water gas shift reactor R2.

When the desired operating temperature in water gas shift reactor R2 is achieved, water gas shift process 2 may be returned to the first mode of operation by closing preheating fluid isolation valves V4 and V5 and opening steam isolation valves V2 and V3. This returns the second heat exchanger E2 to using the heat generated by the water gas shift reaction to superheat steam as in water gas shift process 1.

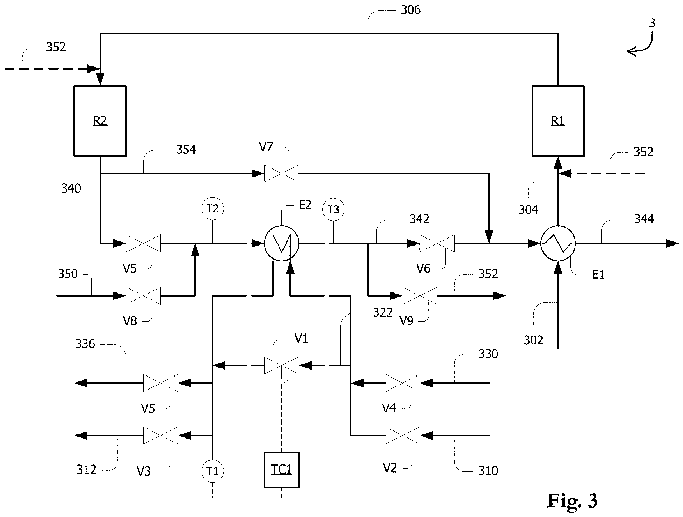

Fig. 3 shows a water gas shift process 3 in which Fig. 2 has been modified to add a third and a fourth mode of operation. The third mode of operation for the water gas shift process may be required before startup of the water gas shift reactor R2 and comprises heating the shift catalyst with an inert gas. The fourth mode of operation for the water gas shift process may be required to activate new shift catalyst by sulfurizing the shift catalyst. In at least some embodiments the water gas shift process 3 may employ only the third mode of operation or may employ only the fourth mode of operation. In at least some embodiments the water gas shift process 3 may employ both the third mode of operation and the fourth mode of operation sequentially, in either order.

In the third mode of operation the shift catalyst must be warmed to between about 240 °C to 300 °C to increase the reactivity of the shift catalyst before introduction of syngas. In the prior art this is achieved by heating up an inert gas such as nitrogen with auxiliary steam and/or electric heaters, but much like in Fig. 2, an auxiliary heater may simplify operations but increase capital costs. For this reason, in the embodiment of Fig. 3 the auxiliary heater is eliminated by repurposing the second heat exchanger to heat a circulation gas stream. Isolation valves V5, V6, and V7 are introduced to reroute the effluent from the water gas shift reactor R2 around the second heat exchanger E2 by closing shifted syngas isolation valves V5 and V6 and opening circulation gas isolation valve V7. In the third mode of operation steam isolation valves V2 and V3 are closed and preheating fluid isolation valves V4 and V5 are open as needed to supply a preheating fluid 330 to the second heat exchanger E2. A circulation gas stream 350 is connected by opening circulation gas isolation valves V8 and V9, which allows the circulation gas stream 350 to be heated in the second heat exchanger E2 to produce a heated circulation gas stream 352. In the third mode of operation the circulation gas stream 350 may comprise an inert gas, such as nitrogen. After passing through the circulation gas islolation valve V9, at least a portion of the heated circulation gas stream 352 may then be introduced to the feed of the guard bed R1 and/or the water gas shift reactor R2 as needed to preheat the reactors and reach the desired activity. A spent circulation gas stream 354 exits the water gas shift reactor R2, passes through the open circulation gas isolation valve V7, and may be recovered, recycled, or vented. As in Fig. 2, the temperature controller TC1 can be used to control the preheating of the circulation gas stream 350 by changing the amount of flow in bypass stream 322. When the desired reactor temperature is achieved, the shifted syngas isolation valves V5 and V6 may be opened, the circulation gas isolation valve V7 may be closed, the circulation gas isolation valves V8 and V9 may be closed, and the water gas shift process will enter the second mode of operation in which the water gas shift reactor is heated in the presence of syngas.

In the fourth mode of operation the valve configuration is identical to the configuration in the third mode of operation. The difference is the composition of the circulation gas stream 350. Fresh shift catalyst for sour operation (in which the syngas stream comprises sulfur species such as hydrogen sulfide) typically is delivered in an oxidized state and must be sulfurized to become active. Sulfurizing the catalyst requires reduction and sulfurization of the catalyst above 350 °C or above 400 °C. In the fourth mode of operation the circulation gas stream 350 may comprise an inert gas such as nitrogen, a reducing gas such as hydrogen and/or carbon monoxide, and a sulfur agent such as carbon disulfide and/or dimethyl sulfide. The circulation gas stream 350 may then be heated in the second heat exchanger E2 to produce a heated circulation gas stream 352 with a temperature high enough to sulfurize the catalyst.

While the principles of the invention have been described above in connection with preferred embodiments, it is to be clearly understood that this description is made only by way of example and not as a limitation of the scope of the invention.

## Claims

1. A method for converting a syngas stream to a shifted syngas stream comprising a first mode of operation and a second mode of operation,
wherein the first mode of operation comprises:
transferring heat from a warm shifted syngas stream to the syngas stream in a first heat exchanger to produce the shifted syngas stream and a heated syngas stream;
reacting the heated syngas stream in the presence of a shift catalyst to produce a hot shifted syngas stream; and
transferring heat from the hot shifted syngas stream to a steam stream in a second heat exchanger to produce the warm shifted syngas stream and a superheated steam stream;
and wherein the second mode of operation comprises:
transferring heat from a hot partially shifted syngas stream to the syngas stream in the first heat exchanger to produce a warm partially shifted syngas stream and the heated syngas stream;
reacting the heated syngas stream in the presence of a shift catalyst to produce a partially shifted syngas stream; and
transferring heat from a preheating fluid to the partially shifted syngas stream in the second heat exchanger to produce a cooled preheating fluid and the hot partially shifted syngas stream.

2. The method of claim 1, wherein the temperature of the preheating fluid is between 250 and 500 °C.

3. The method of claim 1 or 2, wherein the water to dry gas ratio of the syngas stream is between 0.2 and 0.6.

4. The method of any of the preceding claims, wherein the temperature of the heated syngas stream is between 15 °C and 30 °C higher than the dew point of the heated syngas stream, and/or
wherein the reaction of the heated syngas stream is adiabatic.

5. The method of any of the preceding claims, wherein the temperature of the shifted syngas stream is greater than 350 °C.

6. The method of any of the preceding claims, wherein the second mode further comprises:
forming a bypass stream comprising at least a portion of the preheating fluid, wherein the bypass stream bypasses the second heat exchanger;
measuring a temperature of at least one of the cooled preheating fluid, the partially shifted syngas stream, and the hot partially shifted syngas stream; and
changing the flow rate of the bypass stream to control the temperature of at least one of the cooled preheating fluid, the partially shifted syngas stream, and the hot partially shifted syngas stream.

7. The method of any of the preceding claims, further comprising a third mode of operation, the third mode comprising:
transferring heat from the preheating fluid to a circulation gas stream in the second heat exchanger to produce the cooled preheating fluid and a heated circulation gas stream; and
contacting the heated circulation gas stream with the shift catalyst.

8. The method of claim 7, wherein the third mode further comprises:
forming a bypass stream comprising at least a portion of the preheating fluid, wherein the bypass stream bypasses the second heat exchanger;
measuring a temperature of at least one of the cooled preheating fluid, the circulation gas stream, and the heated circulation gas stream; and
changing the flow rate of the bypass stream to control the temperature of at least one of the cooled preheating fluid, the circulation gas stream, and the heated circulation gas stream.

9. The method of claim 7 or 8, wherein the circulation gas comprises an inert gas.

10. The method of claim 9, wherein the circulation gas comprises an inert gas, a reducing gas, and a sulfur agent.

11. A system for converting a syngas stream to a shifted syngas stream comprising:
a first heat exchanger comprising a hot side inlet, a hot side outlet, a cold side inlet, and a cold side outlet;
a second heat exchanger comprising a hot side inlet, a hot side outlet, a cold side inlet, and a cold side outlet;
a reactor comprising a shift catalyst, an inlet, and an outlet;
wherein the system comprises a first mode of operation and a second mode of operation,
wherein during the first mode of operation:
the cold side inlet of the first heat exchanger is in fluid flow communication with the syngas stream;
the cold side outlet of the first heat exchanger is in fluid flow communication with the inlet of the reactor;
the outlet of the reactor is in fluid flow communication with the hot side inlet of the second heat exchanger;
the hot side outlet of the second heat exchanger is in fluid flow communication with the hot side inlet of the first heat exchanger; and
the cold side inlet of the second heat exchanger is in fluid flow communication with a steam stream;
and wherein during the second mode of operation:
the cold side inlet of the first heat exchanger is in fluid flow communication with the syngas stream;
the cold side outlet of the first heat exchanger is in fluid flow communication with the inlet of the reactor;
the outlet of the reactor is in fluid flow communication with the cold side inlet of the second heat exchanger;
the cold side outlet of the second heat exchanger is in fluid flow communication with the hot side inlet of the first heat exchanger; and
the hot side inlet of the second heat exchanger is in fluid flow communication with a preheating fluid.

12. The system of claim 11, further comprising a third mode of operation,
wherein during the third mode of operation:
the cold side inlet of the second heat exchanger is in fluid flow communication with a circulation gas stream;
the cold side outlet of the second heat exchanger is in fluid flow communication with the inlet of the reactor; and
the hot side inlet of the second heat exchanger is in fluid flow communication with the preheating fluid.

13. The system of claim 12, wherein the circulation gas comprises an inert gas.

14. The system of claim 13, wherein the circulation gas comprises an inert gas, a reducing gas, and a sulfur agent.

15. The system of any one of claims 11 to 14, further comprising a bypass conduit comprising a bypass valve in fluid flow communication with the hot side inlet of the second heat exchanger and the hot side outlet of the second heat exchanger;
one or more temperature sensors in fluid flow communication with at least one of the hot side outlet of the second heat exchanger, the cold side inlet of the second heat exchanger, and the cold side outlet of the second heat exchanger; and
a temperature controller configured to receive at least one signal from the one or more temperature sensors and to deliver a signal to the bypass valve.
